# EUROPEAN PATENT SPECIFICATION

(11) **EP 3 875 260 B1**
(45) Date of publication and mention of the grant of the patent: **20.09.2023**
(21) Application number: 20891463.0
(22) Date of filing: 26.11.2020
(51) Int. Cl.: B29D 30/06

(54) **POST CURE INFLATOR FOR TYRES**
AUFPUMPGERÄT FÜR REIFEN NACH DER AUSHÄRTUNG
DISPOSITIF DE GONFLAGE POST-DURCISSEMENT POUR PNEUMATIQUES

(30) Priority: 03.12.2019 CN 201911221493
(43) Date of publication of application: 08.09.2021
(73) Proprietor: SinoArp Technologies (Suzhou) Co., Ltd., Jiangsu 215000 (CN)
(72) Inventor: LIU, Baolong, Suzhou, Jiangsu 215000 (CN); LUO, Weilian, Suzhou, Jiangsu 215000 (CN); ZHANG, Jinarong, Suzhou, Jiangsu 215000 (CN); WANG, Shiju, Suzhou, Jiangsu 215000 (CN)
(74) Representative: Gill Jennings & Every LLP
(86) International application number: PCT/CN2020/131771
(87) International publication number: WO 2021/109917

(56) References cited:
- WO-A2-2011/050167
- CN-A- 102 672 862
- CN-A- 104 802 344
- CN-A- 104 802 344
- CN-A- 108 312 588
- CN-A- 108 312 588
- CN-A- 110 733 193
- CN-U- 206 690 407
- JP-A- H10 151 630
- KR-B1- 101 335 710
- US-A- 5 770 236

## Description

This application claims priority to Chinese Patent Application No. 201911221493.0 filed Dec. 3, 2019.

### TECHNICAL FIELD

The present application relates to the field of tire equipment, for example, a tire post-inflation apparatus.

### BACKGROUND

The tire post-inflation apparatus is an important apparatus used in a tire vulcanization operation and is usually used in conjunction with a tire vulcanizer. The vulcanized tire is unloaded from the vulcanizer and placed on a lower chuck by a manipulator. After the tire is fixed by the upper chuck and the lower chuck, the inflation operation is performed, and then cooling and building-curing of the tire are performed.

The tire post-inflation apparatus in the related art mainly includes the following two types: a flip four-station post-inflation apparatus of which the turning radius is great, resulting in that too much space is occupied and difficulties are brought to the overall layout and maintenance of the apparatus; a stacked post-inflation apparatus of which four stations are located on the same plane, resulting in that the height of the post-inflation apparatus is too great, which is not conducive to the maintenance of the top of the post-inflation apparatus and requires a greater lifting stroke of the manipulator.

CN 104802344A discloses a tire post-inflation apparatus having a novel transmission structure. The tire post-inflation apparatus mainly comprises a vertical column; a first chuck arranged on a first cross beam fixedly connected with the vertical column; and a second chunk arranged on a second cross beam slidably connected with the vertical column relative to the first chuck, wherein the second cross beam is connected with a lead screw through a nut seat, a first chain wheel is sleeved on the lead screw, the first chain wheel and a second chain wheel form a transmission connection, and the second chain wheel is arranged on a motor. According to the present invention, under the premise of meeting of all the functions of the conventional post-inflation, the structure is substantially simplified, the whole work process of the post-inflation is optimized, and the precision and the quality of the tire are improved.

CN 108312588A discloses a swinging tire posttreatment device. The swinging tire posttreatment device comprises at least one receiving device, the receiving device is provided with at least one receiving area; the receiving area comprises a first rim disk and a second rim disk which are arranged oppositely in a tire clamping direction; one of the first rim disk and the second rim disk can move relative to the other one in order that the first rim disk and the second rim disk can be arranged in a staggered way in the tire clamping direction.

### SUMMARY

The present application provides a tire post-inflation apparatus. The overall occupied space is small, the height is low, and flipping between stations is not needed.

The present invention application is set out in the appended set of claims.

Exemplary, provided is a tire post-inflation apparatus. The tire post-inflation apparatus includes a stand and multiple station mechanisms staggeredly disposed on the stand. Each of the multiple station mechanisms includes a cross beam, a swing arm, and a tension bearing assembly.

The cross beam is connected to the stand, and the cross beam is configured to be connected to a first rim.

The swing arm is rotatably connected to the stand, and the swing arm is configured to be connected to a second rim and a tire.

The tension bearing assembly is configured to bear tension of the first rim and tension of the second rim when the tire is inflated.

As an optional solution of the tire post-inflation apparatus of the present application, the tension bearing assembly includes a buckle member and a locking rod, the buckle member is disposed on the cross beam, the buckle member is connected to the first rim, the locking rod is rotatably disposed on the swing arm, the locking rod is inserted into the second rim and the tire, and the locking rod is able to extend into the buckle member and be locked with the buckle member to bear the tension of the first rim and the tension of the second rim when the tire is inflated.

As an optional solution of the tire post-inflation apparatus of the present application, a locking groove is provided on the buckle member, a locking protrusion is provided on the locking rod, and the locking protrusion is able to be engaged with the locking groove.

As an optional solution of the tire post-inflation apparatus of the present application, the cross beam is slidably connected to the stand in a height direction of the stand.

As an optional solution of the tire post-inflation apparatus of the present application, a height-adjustable pressing member is provided on the cross beam, and the pressing member is configured to be pressed against the first rim.

As an optional solution of the tire post-inflation apparatus of the present application, a mounting seat is provided on the stand, and the swing arm is rotatably connected to the mounting seat.

The tire post-inflation apparatus provided in the present application includes a stand and multiple station mechanisms staggeredly disposed on the stand. By adopting a staggered layout of stations, the upper and lower stations are stacked and staggered so that the overall height of the tire post-inflation apparatus is reduced. Each of the multiple station mechanisms includes a cross beam, a swing arm, and a tension bearing assembly. The cross beam is connected to the stand. The cross beam is configured to be connected to a first rim. The swing arm is rotatably connected to the stand. The swing arm is configured to be connected to a second rim and a tire. The tension bearing assembly is configured to bear tension of the first rim and tension of the second rim when the tire is inflated. Each station is provided with an independent swing arm. The swing arm loads or unloads the tire in an out position, and the tire is inflated when the swing arm rotates to an inflation position. Flipping between stations is not needed when inflation is performed in different stations. The tire post-inflation apparatus provided in the present application has the following advantages: a simple structure, a small overall occupied space, a low height, not needing flipping between stations, good stability, high precision and easy adjustment, and strong maintainability.

### BRIEF DESCRIPTION OF DRAWINGS

FIG. 1 is a structure view of a tire post-inflation apparatus according to an embodiment of the present application; and
FIG. 2 is a structure view of the tire post-inflation apparatus according to an embodiment of the present application.

### Reference list

- 1: stand
- 11: mounting seat
- 2: station mechanism
- 21: cross beam
- 22: swing arm
- 23: tension bearing assembly
- 24: pressing member
- 211: vertical beam
- 2111: positioning pin
- 2112: stopper
- 231: buckle member
- 232: locking rod
- 2321: locking protrusion
- 233: pressurizing cylinder
- 100: first rim
- 200: second rim
- 300: tire

### DETAILED DESCRIPTION

In the description of the present application, it should be noted that the orientations or position relations indicated by terms such as "center", "above", "below", "left", "right", "vertical", "horizontal", "inside", "outside", and the like are based on orientations or position relations shown in the drawings. These orientations or position relations are intended only to facilitate and simplify description of the present application and not to indicate or imply that a apparatus or element referred to must have such specific orientations or must be configured or operated in such specific orientations. Thus, these orientations or position relations are not to be construed as limiting the present application. In addition, terms such as "first" and "second" are used merely for the purpose of description and are not to be construed as indicating or implying relative importance. For example, the terms "first position" and "second position" are two different positions.

In the description of the present application, it should be noted that terms such as "mounted", "joined", and "connected" are to be understood in a broad sense unless otherwise expressly specified and limited. For example, the term "connected" may refer to "securely connected" or "detachably connected"; may refer to "mechanically connected" or "electrically connected"; or may refer to "connected directly", "connected indirectly through an intermediary", or "connected in two components". For those of ordinary skill in the art, the specific meanings of the preceding terms in the present application may be understood based on specific situations.

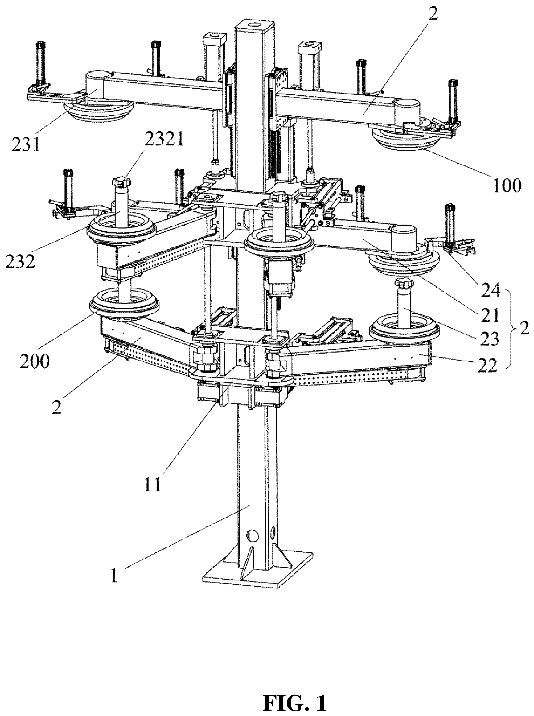

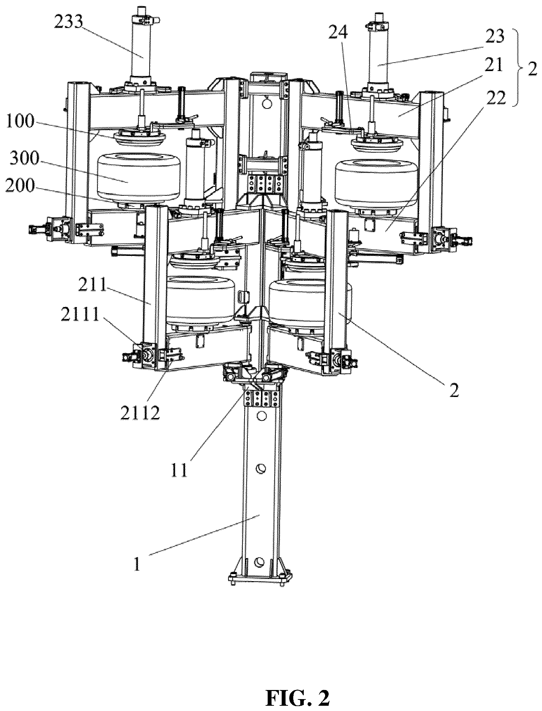

This embodiment provides a tire post-inflation apparatus. As shown in FIGS. 1 and 2, the tire post-inflation apparatus includes a stand 1 and multiple station mechanisms 2 staggeredly disposed on the stand 1, and each of the multiple station mechanisms 2 includes a cross beam 21, a swing arm 22, and a tension bearing assembly 23. By adopting a staggered layout of stations, the upper and lower stations are stacked and staggered so that the overall height of the tire post-inflation apparatus is reduced. In this embodiment, four station mechanisms 2 are provided, two of the four station mechanisms 2 are in one row, two rows of station mechanisms 2 exist, and two of the four station mechanisms 2 in the same row are located on two sides of the stand 1, respectively.

In an embodiment, the cross beam 21 is connected to the stand 1, and the cross beam 21 is configured to be connected to a first rim 100. The swing arm 22 is rotatably connected to the stand 1, and the swing arm 22 is configured to be connected to a second rim 200 and a tire 300. The tension bearing assembly 23 is configured to bear the tension of the first rim 100 and the tension of the second rim 200 when the tire 300 is inflated. Each station is provided with an independent swing arm 22. The swing arm 22 loads or unloads the tire 300 in an out position, and the tire 300 may be inflated when the swing arm 22 rotates to an inflation position. Flipping between stations is not needed when inflation is performed in different stations.

As shown in FIG. 1, in an embodiment, to achieve the tension bearing function of the tension bearing assembly 23, the tension bearing assembly 23 includes a buckle member 231 and a locking rod 232. The buckle member 231 is disposed on the cross beam 21, and the buckle member 231 is connected to the first rim 100. The locking rod 232 is rotatably disposed on the swing arm 22, the locking rod 232 is inserted into the second rim 200 and the tire 300, the locking rod 232 is able to extend into the buckle member 231 and be locked with the buckle member 231 to bear the tension of the first rim 100 and the tension of the second rim 200 when the tire 300 is inflated. When the tire 300 is inflated, the locking rod 232 is a force-receiving member, the stand 1, the cross beam 21, and the swing arm 22 are not subject to tension of the tire 300 inflation, and the structure is stable.

In an embodiment, to facilitate the locking of the locking rod 232 and the buckle member 231, a locking groove is provided on the buckle member 231, a locking protrusion 2321 is provided on the locking rod 232, and the locking protrusion 2321 is able to be engaged with the locking groove. In an embodiment, to facilitate the adjustment of the height of the buckle member 231, the cross beam 21 is slidably connected to the stand 1 in a height direction of the stand 1. In this embodiment, a slide rail is provided on the stand 1, the cross beam 21 is connected to an output end of an air cylinder, and the air cylinder pushes the cross beam 21 to slide up and down on the slide rail in the height direction of the stand 1.

The following two paragraphs in connection with FIG. 2 are not part of the present invention.

As shown in FIG. 2, in an embodiment, to achieve the tension bearing function of the tension bearing assembly 23, the tension bearing assembly 23 includes a pressurizing cylinder 233. The pressurizing cylinder 233 is disposed on the cross beam 21, and the pressurizing cylinder 233 is configured to bear the tension of the first rim 100 and the tension of the second rim 200 when tire 300 is inflated. In an embodiment, to enhance the ability of the cross beam 21 to bear dynamic loads, the cross beam 21 is fixedly connected to the stand 1. When the tire 300 is inflated, the pressurizing cylinder 233 bears the tension of the tire 300 and transmits the force to the stand 1 at the same time, that is, the stand 1 bears the tension of the tire 300 inflation.

In an embodiment, to facilitate the positioning of the swing arm 22 such that the swing arm 22 rotates to a preset inflation position, a vertical beam 211 is provided at one end of the cross beam 21 facing away from the stand 1. A positioning pin 2111 is provided at a bottom of the vertical beam 211, a positioning hole is provided at one end of the swing arm 22 facing away from the stand 1, and the positioning pin 2111 is able to be inserted into the positioning hole to position the swing arm 22 such that the swing arm 22 rotates to the preset inflation position. In this embodiment, the positioning pin 2111 is connected to the output end of the air cylinder. When the swing arm 22 rotates to the preset inflation position, the air cylinder drives the positioning pin 2111 to be inserted into the positioning hole of the swing arm 22. In an embodiment, to further position the swing arm 22 such that the swing arm 22 rotates to the preset inflated position, a stopper 2112 is provided at the bottom of the vertical beam 211, and the stopper 2112 is able to abut against the swing arm 22. Moreover, the stopper 2112 may serve as a sensing apparatus for the swing arm 22 rotating to the preset inflation position.

In an embodiment, to facilitate the adjustment of the distance between the first rim 100 and the second rim 200, a height-adjustable pressing member 24 is provided on the cross beam 21, and the pressing member 24 is configured to be pressed against the first rim 100. In this embodiment, the pressing member 24 is connected to the output end of the air cylinder, and the air cylinder drives the pressing member 24 to move up and down in the height direction of the stand 1. In an embodiment, to facilitate the installation of the swing arm 22, a mounting seat 11 is provided on the stand 1, and the swing arm 22 is rotatably connected to the mounting seat 11. In this embodiment, the rotation of the swing arm 22 is driven by the air cylinder, which is the related art and will not be repeated herein.

The tire post-inflation apparatus provided in this embodiment includes a stand 1 and multiple station mechanisms 2 staggeredly disposed on the stand 1. By adopting a staggered layout of stations, the upper and lower stations are stacked and staggered so that the overall height of the tire post-inflation apparatus is reduced. Each of the multiple station mechanisms 2 includes a cross beam 21, a swing arm 22, and a tension bearing assembly 23. The cross beam 21 is connected to the stand 1. The cross beam 21 is configured to be connected to a first rim 100. The swing arm 22 is rotatably connected to the stand 1. The swing arm 22 is configured to be connected to a second rim 200 and a tire 300. The tension bearing assembly 23 is configured to bear the tension of the first rim 100 and the tension of the second rim 200 when the tire 300 is inflated. Each station is provided with an independent swing arm 22. The swing arm 22 loads or unloads the tire 300 in an out position, and the tire 300 may be inflated when the swing arm 22 rotates to an inflation position. Flipping between stations is not needed when inflation is performed in different stations.

The tire post-inflation apparatus provided in this embodiment has the following advantages: a simple structure, a small overall occupied space, a low height, not needing flipping between stations, good stability, high precision and easy adjustment, and strong maintainability.

## Claims

1. A tire post-inflation apparatus, comprising a stand (1) and a plurality of station mechanisms (2) staggeredly disposed on the stand (1), wherein each of the plurality of station mechanisms (2) comprises:
a cross beam (21) connected to the stand (1), wherein the cross beam (21) is configured to be connected to a first rim (100);
a swing arm (22) rotatably connected to the stand (1), wherein the swing arm (22) is configured to be connected to a second rim (200) and a tire (300); and
a tension bearing assembly (23) configured to bear tension of the first rim (100) and tension of the second rim (200) when the tire (300) is inflated;
**characterized in that**:
the tension bearing assembly (23) comprises a buckle member (231) and a locking rod (232), the buckle member (231) is disposed on the cross beam (21), the buckle member (231) is connected to the first rim (100), the locking rod (232) is rotatably disposed on the swing arm (22), the locking rod (232) is inserted into the second rim (200) and the tire (300), and the locking rod (232) is able to extend into the buckle member (231) and be locked with the buckle member (231) to bear the tension of the first rim (100) and the tension of the second rim (200) when the tire (300) is inflated.

2. The tire post-inflation apparatus of claim 1, wherein a locking groove is provided on the buckle member (231), a locking protrusion (2321) is provided on the locking rod (232), and the locking protrusion (2321) is able to be engaged with the locking groove.

3. The tire post-inflation apparatus of claim 2, wherein the cross beam (21) is slidably connected to the stand (1) in a height direction of the stand (1).

4. The tire post-inflation apparatus of any one of claims 1 to 3, wherein a height-adjustable pressing member (24) is provided on the cross beam (21), and the pressing member (24) is configured to be pressed against the first rim (100).

5. The tire post-inflation apparatus of any one of claims 1 to 3, wherein a mounting seat (11) is provided on the stand (1), and the swing arm (22) is rotatably connected to the mounting seat (11).

## Patentansprüche

1. Gerät für Reifen nach dem Aufpumpen, das einen Ständer (1) und eine Vielzahl von Stationsmechanismen (2) umfasst, die auf dem Ständer (1) versetzt angeordnet sind, wobei jeder der Vielzahl von Stationsmechanismen (2) umfasst:
Einen mit dem Ständer (1) verbundenen Querbalken (21), wobei der Querbalken (21) ausgelegt ist, mit einer ersten Felge (100) verbunden zu werden;
einen Schwenkarm (22), der drehbar mit dem Ständer (1) verbunden ist, wobei der Schwenkarm (22) ausgelegt ist, mit einer zweiten Felge (200) und einem Reifen (300) verbunden zu werden; und
eine Spannung tragende Anordnung (23), die ausgelegt ist, Spannung der ersten Felge (100) und Spannung der zweiten Felge (200) zu tragen, wenn der Reifen (300) aufgeblasen wird;
**dadurch gekennzeichnet, dass**:
Die Spannung tragende Anordnung (23) ein Rastelement (231) und eine Verriegelungsstange (232) umfasst, wobei das Rastelement (231) auf dem Querbalken (21) angeordnet ist, das Rastelement (231) mit der ersten Felge (100) verbunden ist, die Verriegelungsstange (232) drehbar am Schwenkarm (22) angeordnet ist, die Verriegelungsstange (232) in die zweite Felge (200) und den Reifen (300) eingeschoben ist, und die Verriegelungsstange (232) fähig ist, sich in das Rastelement (231) zu erstrecken und mit dem Rastelement (231) verriegelt zu werden, um die Spannung der ersten Felge (100) und die Spannung der zweiten Felge (200) zu tragen, wenn der Reifen (300) aufgepumpt wird.

2. Gerät für Reifen nach dem Aufpumpen nach Anspruch 1, wobei eine Verriegelungsnut am Rastelement (231) vorgesehen ist, ein Verriegelungsvorsprung (2321) an der Verriegelungsstange (232) vorgesehen ist, und der Verriegelungsvorsprung (2321) fähig ist, mit der Verriegelungsnut in Eingriff gebracht zu werden.

3. Gerät für Reifen nach dem Aufpumpen nach Anspruch 2, wobei der Querbalken (21) verschiebbar mit dem Ständer (1) in einer Höhenrichtung des Ständers (1) verbunden ist.

4. Gerät für Reifen nach dem Aufpumpen nach irgendeinem der Ansprüche 1 bis 3, wobei ein höhenverstellbares Druckelement (24) am Querbalken (21) vorgesehen ist, und das Druckelement (24) ausgelegt ist, gegen die erste Felge (100) gepresst zu werden.

5. Gerät für Reifen nach dem Aufpumpen nach irgendeinem der Ansprüche 1 bis 3, wobei ein Montagesitz (11) am Ständer (1) vorgesehen ist, und der Schwenkarm (22) drehbar mit dem Montagesitz (11) verbunden ist.

## Revendications

1. Appareil de post-gonflage de pneumatiques, comprenant une colonne (1) et une pluralité de mécanismes de poste (2) disposés de manière échelonnée sur la colonne (1), dans lequel chaque mécanisme de poste de la pluralité de mécanismes de poste (2) comprend :
une barre transversale (21) raccordée à la colonne (1), la barre transversale (21) étant configurée pour être raccordée à une première jante (100) ;
un bras oscillant (22) raccordé de manière rotative à la colonne (1), le bras oscillant (22) étant configuré pour être raccordé à une deuxième jante (200) et un pneumatique (300) ; et
un ensemble de support de tension (23) configuré pour supporter la tension de la première jante (100) et la tension de la deuxième jante (200) lorsque le pneumatique (300) est gonflé ;
**caractérisé en ce que** :
l'ensemble de support de tension (23) comprend un élément de fléchissement (231) et une tige de verrouillage (232), l'élément de fléchissement (231) est disposé sur la barre transversale (21), l'élément de fléchissement (231) est raccordé à la première jante (100), la tige de verrouillage (232) est disposée de manière rotative sur le bras oscillant (22), la tige de verrouillage (232) est insérée dans la deuxième jante (200) et le pneumatique (300), et la tige de verrouillage (232) est apte à s'étendre jusque dans l'élément de fléchissement (231) et être verrouillée avec l'élément de fléchissement (231) afin de supporter la tension de la première jante (100) et la tension de la deuxième jante (200) lorsque le pneumatique (300) est gonflé.

2. Appareil de post-gonflage de pneumatiques de la revendication 1, dans lequel une rainure de verrouillage est prévue sur l'élément de fléchissement (231), une saillie de verrouillage (2321) est prévue sur la tige de verrouillage (232), et la saillie de verrouillage (2321) est apte à être mise en prise avec la rainure de verrouillage.

3. Appareil de post-gonflage de pneumatiques de la revendication 2, dans lequel la barre transversale (21) est raccordée de manière coulissante à la colonne (1) suivant un sens de la hauteur de la colonne (1).

4. Appareil de post-gonflage de pneumatiques de n'importe laquelle des revendications 1 à 3, dans lequel un élément de pression à hauteur réglable (24) est prévu sur la barre transversale (21), et l'élément de pression (24) est configuré pour être pressé contre la première jante (100).

5. Appareil de post-gonflage de pneumatiques de n'importe laquelle des revendications 1 à 3, dans lequel un siège de montage (11) est prévu sur la colonne (1), et le bras oscillant (22) est raccordé de manière rotative au siège de montage (11).
